# EUROPÄISCHE PATENTANMELDUNG

(11) **EP 0 955 605 A1**
(43) Veröffentlichungstag der Anmeldung: **10.11.1999**
(21) Anmeldenummer: 98810420.4
(22) Anmeldetag: 07.05.1998
(51) Int. Cl.: G06T 7/00, G06K 9/64

(54) **Verfahren zur Lagebestimmung eines Objektes mittels digitaler Bildverarbeitung**

(71) Anmelder: ESEC Management SA, 6330 Cham (CH); ESEC SA, CH-6330 Cham/Steinhausen (CH)
(72) Erfinder: Wen, Jianyong, 8910 Affoltern am Albis (CH)

(57) **Zusammenfassung**

Bei einem Verfahren zur Lagebestimmung eines Objektes mittels digitaler Bildverarbeitung werden in einer Lernphase ausser einem ersten Referenzbild mehrere je um einen Bruchteil eines Pixels einer CCD-Kamera zu diesem verschobene Referenzbilder aufgenommen und gespeichert. In einer Arbeitsphase wird ein Testbild des Objektes aufgenommen und ein Vergleich des Testbildes mit allen Referenzbildern durchgeführt, um die Lage des Testbildes zu finden, in der beste Übereinstimmung des Testbildes mit irgendeinem der Referenzbilder besteht.

## Beschreibung

Die Erfindung bezieht sich auf ein Verfahren zur Lagebestimmung eines Objektes gemäss dem Oberbegriff des Anspruches 1.

Bildverarbeitungsverfahren werden z.B. in industriellen Prozessen eingesetzt, um die Istposition eines Objekts in Bezug aufeine durch x- und y-Koordinaten gegebene Sollposition festzustellen. Entsprechend den ermittelten Lagemesswerten können sodann z.B. durch Steuerung eines Manipulators Korrekturbewegungen des Objektes ausgeführt werden. Üblicherweise werden dabei sowohl zur Aufnahme des Referenzbildes (Bestimmung der Sollposition) wie auch des Testbildes (Erfassung der Istposition des Objekts) CCD-Bildkameras verwendet. Werden mehrere - z.B. zwei auf einer Bilddiagonale liegende - Teilbereiche des Testbildes ausgewertet, so kann ausser der Lage in zwei Koordinatenrichtungen auch die Drehlage des Objekts in der Ebene bestimmt werden.

Bekannt ist die Anwendung solcher Verfahren u.a. in der Halbleitermontagetechnik, auf die weiter unten noch näher eingegangen wird. Dabei können ausgewählte Bildbereiche von auf der Chipoberfläche vorhandenen Schaltungsstrukturen benutzt werden, wobei es die sehr hohe Wiederholgenauigkeit der Strukturen erlaubt, ein von einem einzelnen Chip aufgenommenes und digital gespeichertes Bild als Referenzbild für eine ganze Serie gleichartiger Chips zu verwenden.

Bei den bekannten CCD-Kameras wird das Bild auf eine Sensoranordnung projiziert, die diskrete, "Pixel" genannte Sensorelemente in regelmässiger Rasteranordnung enthält. Diese sind in der Bildebene matrixartig in Reihen und Kolonnen entlang den Koordinatenrichtungen x bzw. y angeordnet. Die Pixel werden seriell abgefragt und liefern diskrete, jeder Pixelkoordinate zugeordnete Grauwerte, die zusammen mit den zugehörigen Pixel-Koordinaten digital gespeichert und verarbeitet werden. Die Auflösung solcher Kameras ist durch die Anzahl der Pixel pro Flächeneinheit gegeben. Sie kann durch Erhöhung der Anzahl Pixel pro Flächeneinheit gesteigert werden, jedoch betragen die Kosten hochauflösender Kameras ein Mehrfaches von Standardkameras mit 512 x 512 Pixeln. Ausserdem werden höhere Speicherkapazität und Rechenleistung bei der digitalen Verarbeitung benötigt.

Bei der rechnerischen Bildverarbeitung wird schrittweise in verschiedenen Relativpositionen zwischen einem Testbild und dem gespeicherten Referenzbild der Grad derjeweiligen Übereinstimmung ermittelt. Beispielsweise wird die Standardkorrelation derjeweiligen Grauwertmatrix der verglichenen Bildbereiche errechnet. Um eine höhere Positionierungsgenauigkeit zu erreichen, als sie durch den Pixelraster vorgegeben ist, kann eine Interpolationsmethode angewendet werden. Insbesondere ist es bekannt, eine Parabel zu berechnen, die durch den besten errechneten Übereinstimmungswert (Korrelationskoeffizient) und die beiden benachbarten Werte verläuft, wobei die Posstion des Scheitels der Parabel als gesuchter Interpolationswert angenommen wird. Eine solche Interpolation kann jedoch durchaus fehlerhaft sein, indem die angenommene Parabel nicht mit den realen Verhältnissen übereinstimmen muss.

Schliesslich ist eine weitere Fehlerquelle zu beachten, die in der Projektion des optischen Bildes auf den diskreten Pixelraster begründet ist: Das optische Bild ist im allgemeinen zufällig bezüglich des Pixelrasters orientiert und die CCD-Kamera liefert beispielsweise für einen runden, dunklen Fleck verschiedene Grauwertsignale, je nachdem, ob dessen Projektion auf die Mitte eines Pixels oder auf die aneinaderstossenden Ecken von vier benachbarten Pixeln zentriert ist.

Der Erfindung liegt die Aufgabe zugrunde, ein Bildverarbeitungsverfahren vorzuschlagen, das bei der Lagebestimmung von Objekten bei vorgegebenem Pixelraster eine Steigerung der Genauigkeit mit tragbarem Aufwand ermöglicht.

Die genannte Aufgabe wird erfindungsgemäss gelöst durch die Merkmale des Anspruchs 1.

Die genannte Aufgabe wird erfindungsgemäss dadurch gelöst, dass in einer Lernphase ausser einem zentralen Referenzbild mehrere um dieses herum gruppierte, je um einen Bruchteil eines Pixels zu diesem Referenzbild verschobene weitere Referenzbilder aufgenommen und gespeichert werden. Bei der Ermittlung der Istposition des Objektes in der Arbeitsphase wird dessen Testbild einerseits mit dem zentralen Referenzbild und andererseits mit den weiteren Referenzbildern verglichen und daraus eine Subpixelkorrektur des Objektes ermittelt. Unter Subpixelkorrektur wird in diesem Zusammenhang eine durch einen Vektor ausdrückbare Korrektur verstanden, wobei die Komponenten des Vektors in beiden Koordinatenrichtungen x bzw. y kleiner sind als das durch den Pixelraster vorgegebene Inkrement.

Nachfolgend wird ein Ausführungsbeispiel der Erfindung anhand der Zeichnung näher erläutert.

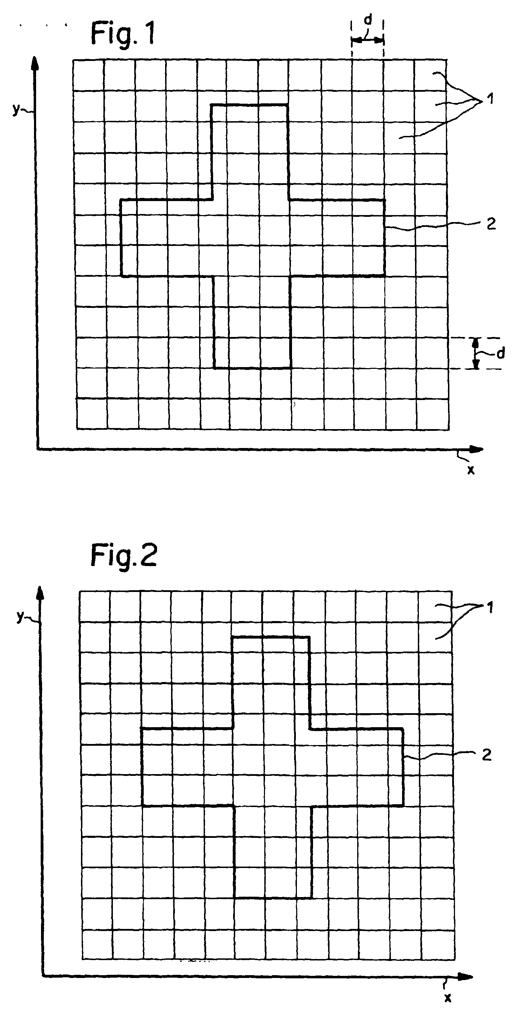

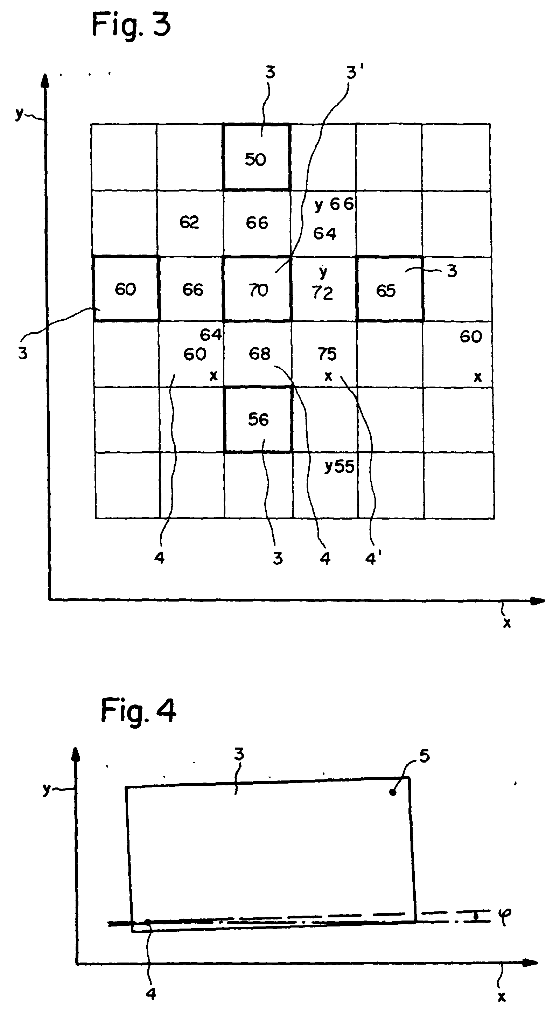

Es zeigen:
- Fig. 3, 4: das auf die Pixel einer CCD-Kamera projizierte Bild eines Objektes, das sich in einer ersten bzw. zweiten Referenzlage befindet.
- Fig. 3: eine Matrix mit Korrelationswerten, und
- Fig. 4: einen Gegenstand, dessen Lage und Orientierung mittels zweier Objekte bestimmbar ist.

Das Verfahren zur Lagebestimmung eines Objektes mittels digitaler Bildverarbeitung weist eine Lernphase und eine Arbeitsphase auf. In der Lernphase wird das Objekt mittels eines in einer x-Richtung und in einer dazu senkrechten y-Richtung beweglichen Tisches in das Sichtfeld der CCD-Kamera gebracht, wobei sich das Referenzobjekt nun in einer ersten Referenzlage befindet.

Die Fig. 3 zeigt das auf die Pixel 1 der CCD-Kamera projizierte Bild 2 des beispielsweise kreuzförmigen Objektes, das sich in der ersten Referenzlage befindet. Es sind nur diejenigen Pixel 1 der CCD-Kamera dargestellt, in deren Bereich das Bild 2 liegt. Die Pixel 1 sind im Abstand d matrixartig in Kolonnen und Reihen angeordnet. Die von den Pixeln 1 gemessenen Helligkeitswerte des Bildes 2 werden nun in digitaler Form als erstes Referenzbild gespeichert. Anschliessend wird das Objekt durch Verschiebung des Tisches in weitere Referenzlagen gebracht, die gegenüber der ersten Referenzlage um einen Bruchteil des Pixelabstandes d in x- und/oder y-Richtung verschoben sind. Die von den Pixeln 1 gemessenen Helligkeitswerte des Bildes 2 werden in jeder der weiteren Referenzlagen als weitere Referenzbilder ebenfalls digital gespeichert. Zur näheren Illustration zeigt die Fig. 4 das auf die Pixel 1 der CCD-Kamera projizierte Bild 2 des Objektes, das sich nun in der zweiten Referenzlage befindet, die gegenüber der ersten Referenzlage um einen halben Pixelabstand, d.h. um den Abstand d/2, in x-Richtung verschoben ist. In Koordinatenschreibweise ist das Objekt in der zweiten Referenzlage um den Vektor (d/2, 0) gegenüber der ersten Referenzlage verschoben.

Anzahl und Lage der weiteren Referenzlagen sind frei wählbar. Um in der Arbeitsphase die Lage des Objektes mit einer Auflösung von einem halben Pixelabstand zu erhalten, werden bevorzugt neun Referenzlagen verwendet, die der ersten Referenzlage und acht weiteren Referenzlagen entsprechen, wobei die acht weiteren Referenzlagen gegenüber der ersten Referenzlage in x- und in y-Richtung um die Vektoren (-d/2,0), (-d/2, -d/2), (0,-d/2), (d/2, -d/2), (d/2, 0), (d/2, d/2), (0, d/2) bzw. (-d/2, d/2) verschoben sind. Für eine Auflösung von 0.25 Pixeln werden in analoger Weise bevorzugt 25, für eine Auflösung von 0.125 Pixeln bevorzugt 81 Referenzlagen verwendet.

In der Arbeitsphase wird das Objekt, dessen Lage nun zu bestimmen ist, in das Sichtfeld der CCD-Kamera gebracht und es wird das aufdie Pixel projizierte Bild des Objektes als Testbild digital erfasst. Anschliessend wird die Lage des Objektes in bekannter Weise durch Vergleich des Testbildes mit den gespeicherten Referenzbildern bestimmt. Ein bevorzugtes Verfahren wird nun anhand der Fig. 3 näher erläutert, in der Korrelationswerte in matrixartig angeordneten Feldern beispielhaft dargestellt sind. Im Beispiel beträgt die Zahl der weiteren Referenzbilder acht.

Wie beim Stand der Technik findet in einem ersten Schritt nur ein Vergleich des Testbildes mit dem ersten Referenzbild statt, bis eine Lage des Objektes bestimmt ist, in der der Korrelationswert, der ein Mass für die Übereinstimmung der Lage des Testbildes mit dem Referenzbild ist, ein Maximum annimmt. In der Fig. 3 ist bei fünf dick umrandeten Feldern 3, 3' je im Zentrum der berechnete Korrelationswert eingetragen, wobei der Korrelationswert beim mittleren Feld 3' maximal ist. Das mittlere Feld 3' entspricht z.B. einer Lage des Objektes, die gegenüber dem ersten Referenzbild um vier Pixel in x-Richtung und um drei Pixel in y-Richtung verschoben ist. Die anderen vier Felder 3 sind Lagen des Objektes zugeordnet, die um je ein Pixel in positiver oder negativer x- oder y-Richtung verschoben sind.

In einem zweiten Schritt werden nun die Korrelationswerte berechnet, die sich ergeben, wenn die Lage des Testbildes gegenüber den weiteren acht Referenzbildern um die beim ersten Schritt ermittelten vier Pixel in x-Richtung und um die drei Pixel in y-Richtung verschoben ist. Die beispielhaft angegebenen Korrelationswerte sind in Feldern 4 eingetragen. Man kann sich vorstellen, dass der Abstand zwischen den Feldern 3 in x- oder y-Richtuung einen Pixel beträgt, während der Abstand zwischen den Feldern 3 und benachbarten Feldern 4 einen halben Pixel beträgt. Das Beispiel ist nun so gewählt, dass der Korrelationswert ein Maximum im Feld 4' annimmt. Damit ist nun eine beste Lage des Objektes mit einer Auflösung von einem halben Pixel gefunden, die gegenüber dem ersten Referenzbild um 4.5 Pixel in x-Richtung und um 2.5 Pixel in y-Richtung verschoben ist.

In einem dritten Schritt werden nun die fünf Korrelationswerte bestimmt, die sich ergeben, wenn die Lage des Testbildes gegenüber dem Referenzbild mit dem höchsten Korrelationswert wiederum um einen Pixel in positiver x- und/oder y-Richtung verschoben wird. Diese Korrelationswerte sind in den entsprechenden Feldern 4 in der rechten oberen Ecke eingetragen. Mittels einer Interpolation der Korrelationswerte der drei entlang der x-Achse angeordneten Felder 4 (die in der Fig. 3 mit einem x markiert sind) und einer Interpolation der Korrelationswerte der drei entlang der y-Achse angeordneten Felder 4 (die in der Fig. 3 mit einem y markiert sind) kann nun wie beim Stand der Technik die Lage des Objektes mit einer im Subpixelbereich liegenden Genauigkeit bestimmt werden. Im Beispiel ergibt sich die Lage des Objektes als gegenüber der Lage des ersten Referenzbildes um 4.4 Pixel in x-Richtung und um 2.7 Pixel in y-Richtung verschoben.

Es ist selbstverständlich möglich, die Korrelationswerte, die für verschiedene Referenzbilder aber für die an sich gleiche Lage des Objektes bezüglich des ersten Referenzbildes berechnet wurden, zu mitteln.

Das Verfahren lässt sich nicht nur zur Bestimmung der Lage eines relativ einfachen Objektes, sondern auch zur Bestimmung der Lage und der Orientierung eines zweidimensionalen Gegenstandes 5 verwenden. Ein solches Beispiel zeigt die Fig. 4. Der Gegenstand 5 ist beispielsweise ein annähernd rechteckförmiger Halbleiterchip, bei dem in zwei einander diagonal gegenüberliegenden Ecken als Objekte zwei punktförmige Kreise 6, 7 sichtbar sind. Zur Bestimmung der xy-Lage des Gegenstandes 1 in der xy-Ebene und zur Bestimmung seines Drehwinkels ϕ bezüglich der x-Achse werden in der Arbeitsphase nacheinander die Lage des Kreises 6 und die Lage des Kreises 7 gemäss dem vorstehend erläuterten Verfahren bestimmt. Sind die Lagen der Kreise 6 und 7 bestimmt, dann lässt sich daraus der Drehwinkel ϕ des Gegenstandes 5 in bekannter Weise berechnen.

## Patentansprüche

1. Verfahren zur Lagebestimmung eines Objektes mittels digitaler Bildverarbeitung, wobei in einer Arbeitsphase ein Testbild des Objektes von einer Kamera erfasst und mit einem zuvor in einer Lernphase digital gespeicherten ersten Referenzbild verglichen wird, **dadurch gekennzeichnet, dass** in der Lernphase ausser dem ersten Referenzbild mehrere je um einen Bruchteil eines Pixels der Kamera zu diesem verschobene Referenzbilder aufgenommen und gespeichert werden, und dass in der Arbeitsphase ein Vergleich des Testbildes mit allen Referenzbildern durchgeführt wird, um die Lage des Objektes zu finden, in der beste Übereinstimmung des Testbildes mit irgendeinem der Referenzbilder besteht.

2. Verfahren nach Anspruch 1, **dadurch gekennzeichnet, dass** in der Arbeitsphase zuerst der Vergleich nur mit dem ersten Referenzbild durchgeführt wird, bis die Lage des Objektes ermittelt ist, in der beste Übereinstimmung des Testbildes mit dem ersten Referenzbild besteht und dass anschliessend der Vergleich mit den weiteren Referenzbildern durchgeführt wird, um die Lage des Objektes zu finden, in der beste Übereinstimmung des Testbildes mit irgendeinem der Referenzbilder besteht.
